# EUROPÄISCHE PATENTSCHRIFT

(11) **EP 0 532 852 B1**
(45) Veröffentlichungstag und Bekanntmachung des Hinweises auf die Patenterteilung: **21.12.1994**
(21) Anmeldenummer: 92111602.6
(22) Anmeldetag: 08.07.1992
(51) Int. Cl.: B64G 1/50, F28D 5/00

(54) **Verdampfungswärmetauscher**
Evaporative heat exchanger
Echangeur de chaleur à évaporation

(30) Priorität: 14.09.1991 DE 4130692
(43) Veröffentlichungstag der Anmeldung: 24.03.1993
(73) Patentinhaber: Daimler-Benz Aerospace Aktiengesellschaft, 80995 München (DE)
(72) Erfinder: Leidinger, Bernhard, Prof. Dr., W-2803 Weyhe-Leeste (DE)
(74) Vertreter: Hansmann, Dierk, Dipl.-Ing.

(56) Entgegenhaltungen:
- CH-A- 288 254
- DE-C- 348 289
- DE-C- 3 718 873
- GB-A- 204 025
- US-A- 3 187 807

## Beschreibung

Die Erfindung betrifft einen Verdampfungswärmetauscher gemäß dem Oberbegriff des Patentanspruchs 1.

Bei Raumfahrzeugen, die sich in der Auf- oder Abstiegsphase durch die Erdatmosphäre befinden oder die in der Erdumlaufbahn extremen thermischen Belastungen ausgesetzt sind, gilt es, die entstehende Wärme sicher und zuverlässig abzuführen. Zu diesem Zweck werden unter anderem Verdampfungswärmetauscher eingesetzt.

Grundlegendes Prinzip derartiger Wärmetauscher ist es, daß das zu kühlende Medium eines aktiven Flüssigkeitskreislaufes zur Wärmeabfuhr mit einem zu verdampfenden Medium in wärmeübertragenden Kontakt gebracht wird, welches in einem mitgeführten Vorratsbehälter gelagert ist und das anschließend in Form von Dampf vom Raumfahrzeug in die Umgebung abgelassen wird.

Um das zu verdampfende Medium durch eine möglichst vollständige Verdampfung optimal auszunutzen, ist es dabei wichtig, einen möglichst guten thermischen Kontakt und damit einen möglichst vollständigen Wärmeübergang zwischen der Kühlflüssigkeit einerseits und dem zu verdampfenden Medium andererseits sicherzustellen.

Bei einer bekannten Gattung derartiger Wärmetauscher, wie sie beispielsweise in der DE-PS 37 18 873 beschrieben ist, strömt die Kühlflüssigkeit über einzelne Kanäle durch einen Prozeßraum, in den das zu verdampfende Medium über ein Einlaßventil tröpfchenförmig eingesprüht wird. Bei einer zweiten Gattung von Verdampfungswärmetauschern, der auch die Erfindung zuzurechnen ist, fließt hingegen die Kühlflüssigkeit offen durch den Prozeßraum, während das zu verdampfende Medium durch einzelne, in der Regel bündelartig angeordnete Kanäle durch diesen Raum geleitet wird. Die Kühlflüssigkeit wird dabei zusätzlich durch im Prozeßraum angeordnete Blenden zu einem mäanderförmigen Strömungsverlauf gezwungen.

Aufgabe der Erfindung ist es, einen Verdampfungswärmetauscher dieser letztgenannten Gattung so auszubilden, daß die optimale Ausnutzung des mitgeführten zu verdampfenden Mediums sichergestellt ist.

Die Erfindung löst diese Aufgabe durch einen Verdampfungswärmetauscher mit den kennzeichnenden Merkmalen des Patentanspruchs 1. Dadurch, daß die im Prozeßraum angeordneten Röhrchen von dem zu verdampfenden Medium nicht gleichzeitig und nur in einer Richtung, die im allgemeinen der Hauptanströmrichtung der Kühlflüssigkeit entgegengesetzt ist, durchströmt werden, sondern das zu verdampfende Medium diese Röhrchen nacheinander und unter wenigstens einmaliger Bewegungsumkehr durchströmt, erhöht sich der effektive Strömungswiderstand für das zu verdampfende Medium und damit der Wärmeübergangskoeffizient. Zugleich wirken die Umlenkungen um jeweils 180° wie Trägheitsabscheider für etwaig noch mitgeschleppte Flüssigkeitstropfen, so daß sich eine deutliche Reduzierung des Austrages an unverdampftem Medium ergibt. Außerdem bewirkt die, gegebenenfalls mehrfache, Umlenkung des zu verdampfenden Mediums seine gute Durchmischung, so daß eine gleichmäßige Temperaturverteilung und damit homogene Strömungsbedingungen in den einzelnen, zu einer Gruppe gehörenden Röhrchen vorliegen.

Der erfindungsgemäße Wärmetauscher ist dabei besonders geeignet für einen Anwendungsfalls, bei dem als Kühlflüssigkeit Wasser und als zu verdampfendes Medium Ammoniak (NH₃) zum Einsatz kommen.

Durch die in weiterer Ausgestaltung der Erfindung vorgesehene Maßnahme, die Umlenkblenden für die Kühlflüssigkeit jeweils alternierend als Loch- und Ringblenden auszubilden, wird im gesamten Prozeßraum ein rotationssymmetrischer mäanderförmiger Strömungsverlauf erreicht, der auch für die Kühlflüssigkeit eine weitgehend homogene Temperaturverteilung über den Strömungsquerschnitt bewirkt. Dies ist insbesondere dann besonders wichtig, wenn, wie bei der Verwendung von Wasser als Kühlflüssigkeit, die angestrebte Austrittstemperatur der Kühlflüssigkeit aus dem Prozeßraum in der Nähe der Vereisungstemperatur liegt.

Schließlich trägt auch die Maßnahme, den Abstand der einzelnen Röhrchen untereinander mindestens gleich groß wie den Abstand des Röhrchenbündels von der Wand des Prozeßraumes zu wählen, wesentlich zur Herabsetzung einer Vereisungsgefahr in einzelnen Bereichen des Prozeßraumes bei, da auf diese Weise nur ein prozentual geringerer Anteil der Kühlflüssigkeit durch die nicht vermeidbaren Bündelränder fließt, statt wie gewünscht, durch die Räume zwischen den einzelnen Röhrchen, in dem der eigentliche Wärmeaustausch stattfindet. Ein solches unerwünschtes Umgehen des Röhrchenbündels zieht in der Regel eine inhomogene Temperaturverteilung in den einzelnen Strähnen der Kühlflüssigkeit nach sich mit der Gefahr, daß bei einer mittleren Temperatur, die oberhalb der Vereisungstemperatur liegt, diese in einzelnen Bereichen unterschritten ist, und es lokal zu Vereisungen und zum Verstopfen einzelner Strömungspfade kommt.

Nachfolgend soll die Erfindung anhand der Zeichnung näher erläutert werden. Es zeigen:
- Fig. 1: einen Längsschnitt durch einen ersten Verdampfungswärmetauscher,
- Fig. 2: eine seitliche Ansicht der Anordnung gemäß Fig. 1,
- Fig. 3: die Anordnung gemäß Fig. 1 in Draufsicht,
- Fig. 4 bis 6: Vertikalschnitte durch unterschiedliche Bereiche der in Fig. 1 dargestellten Anordnung,
- Fig. 7: eine Prinzipskizze eines zweiten Verdampfungswärmetauschers und
- Fig. 8: einen Schnitt durch einen Wärmetauscher gemäß Fig. 7.

In den Figuren sind gleiche Bauteile mit den gleichen Bezugszeichen versehen.

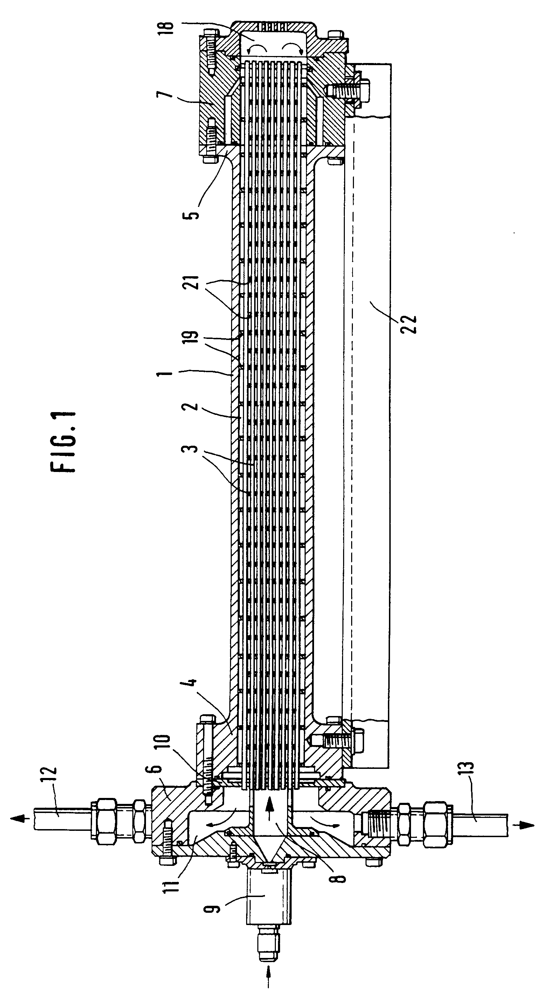

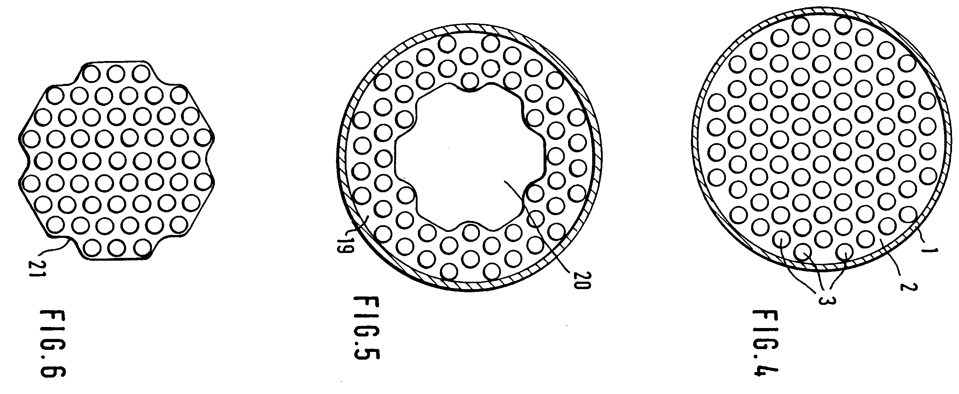

Der in Fig. 1 dargestellte Verdampfungswärmetauscher besteht aus einem zylindrischen Gehäuse 1, in dem in einem Prozeßraum 2 ein Bündel gleichartiger Röhrchen 3 angeordnet ist, die parallel zur Längsachse des Gehäuses 1 verlaufen und die, wie insbesondere die Querschnittdarstellung in Fig. 4 zeigt, gleichmäßig über den gesamten Querschnitt des Prozeßraumes verteilt sind. Der Abstand der einzelnen Röhrchen 3 untereinander ist dabei mindestens gleich groß gewählt wie der Abstand, den der gedachte Rand des Röhrchenbündels von der Innenwand des Gehäuses 1 aufweist. Das Gehäuse 1 weist in seinen Enden jeweils einen Anschlußflansch 4 bzw. 5 auf, über den das Gehäuse 1 mit zwei Abschlußkörpern 6 und 7 verbunden ist, deren Aufbau nachfolgend näher erläutert wird.

Der in der Fig. 1 linke Abschlußkörper 6 weist einen zentralen Einlaßraum 8 für das zu verdampfende Medium, im Fall des hier beschriebenen Ausführungsbeispiels der Erfindung Ammoniak (NH₃), auf, der sich in Richtung auf ein Einlaßventil 9 hin kegelförmig verjüngt. Der Radius des zum Prozeßraum 2 hin offenen Einlaßraumes 8 ist so bemessen, daß er eine innere Gruppe von Röhrchen 3 umfaßt, wobei deren Anzahl in etwa 50 Prozent der Gesamtzahl der vorhandenen Röhrchen 3 beträgt. Diese Röhrchen ragen durch eine Lochplatte 10, die den eigentlichen Abschluß des Prozeßraumes 2 bildet, in das Innere des Einlaßraumes 8 hinein. Die übrigen 50 Prozent des Röhrchenbündels, die den äußeren Ring dieses Bündels bilden, ragen ebenfalls durch die Lochplatte 10 in einen Ringraum 11, der den Einlaßraum 8 umgibt und der mit insgesamt vier, um 10° gegeneinander versetzt angeordneten, Auslaßöffnungen 12 bis 15 für das verdampfte Medium versehen ist.

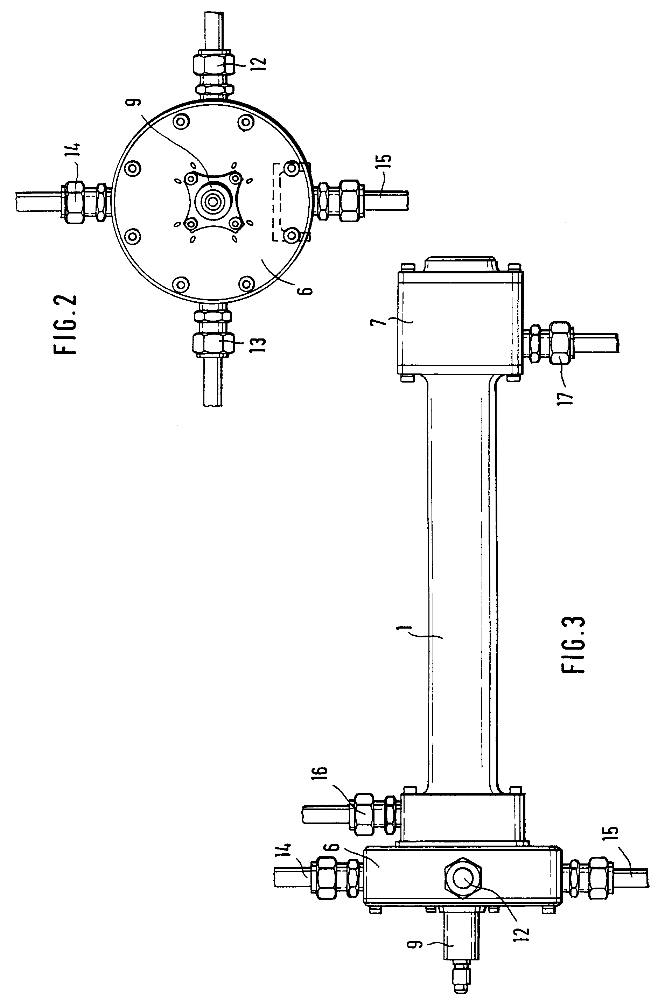

Zwei dieser Auslaßöffnungen 12 bis 15, die bei der Darstellung in Fig. 1 verdeckt sind, sind dabei in Fig. 3 erkennbar. In dieser, gegenüber der Darstellung gemäß Fig. 1 um 90° gedrehten Darstellung sind ferner ein weiterer Auslaß 16 sowie ein Einlaß 17 erkennbar, die beide für die Kühlflüssigkeit, im vorliegenden Fall Wasser, vorgesehen sind und die direkt mit dem Prozeßraum 2 verbunden sind. Während der Auslaß 16 dabei auf einem Bereich erweiterten Durchmesser des Gehäuses 1 angeordnet ist, befindet sich der Einlaß 17 an einem zylindrischen Teilbereich des in der Zeichnung rechten Abschlußkörpers 7.

Durch diesen letztgenannten Abschlußkörper 7 sind, wie aus Fig. 1 ersichtlich, die das zu verdampfende Medium enthaltenden Röhrchen 3 bis zu einem Sammelraum 18 geführt, der das Innere des Abschlußkörpers 7 begrenzt und über den die Gruppe der inneren Röhrchen 3, die mit dem Einlaßraum 8 verbunden sind, mit der Gruppe der außenliegenden Röhrchen 3 in Verbindung stehen. Schließlich sind, jeweils alternierend, im Inneren des Prozeßraumes 2 zwei verschiedene Arten von Umlenkblenden angeordnet. Bei diesen Umlenkblenden handelt es sich zum einen um Lochblenden 19, wie sie in Fig. 5 dargestellt sind und bei denen in der Mitte des Prozeßraumes 2 eine Öffnung 20 verbleibt. Zum anderen handelt es sich um Ringblenden 21, die eine Öffnung in Form eines Ringspaltes im Prozeßraum 2 freigeben. Schließlich ist die gesamte Anordnung auf einen Träger 22 montiert.

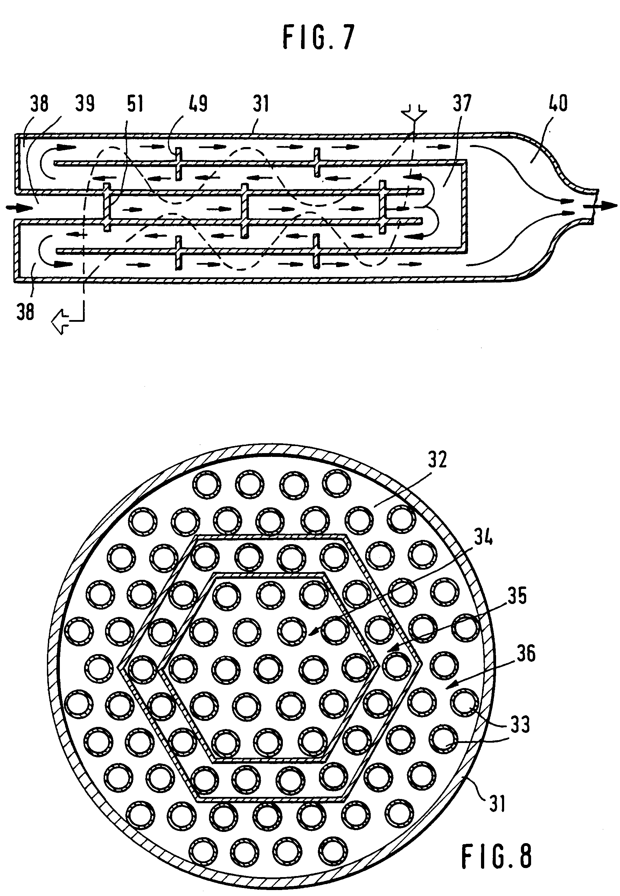

Die Wirkungsweise der vorstehend beschriebenen Anordnung soll anhand eines zweiten Ausführungsbeispiels der Erfindung erläutert werden, das zunächst in Fig. 7 mittels einer stark vereinfachten Prinzipskizze dargestellt ist. In dieser Prinzipskizze wurde aus Gründen der Übersichtlichkeit auf die Darstellung des zwischen den einzelnen, das zu verdampfende Medium führenden Röhrchen 33 vorhandenen Prozeßraumes verzichtet. Wie aus der Darstellung des Querschnitts dieses Wärmetauschers in Fig. 8 ersichtlich ist, sind in diesem Fall die im Inneren eines Gehäuses 31 in einem Prozeßraum 32 angeordneten Röhrchen 33 zu insgesamt drei Gruppen zusammengefaßt: Einer Zentralgruppe 34, bestehend aus etwa 20 bis 30 im Zentrum des Bündels angeordneten Röhrchen, einer Zwischengruppe 35 mit etwa der gleichen Anzahl an Röhrchen sowie einer Randgruppe 36 mit etwa 30 bis 40 Röhrchen.

An den beiden Ende des Prozeßraumes 32 sind diese Gruppen von Röhrchen über Sammelräume miteinander verbunden, und zwar die Gruppen 34 und 35 über den zentralen Sammelraum 37 und die Gruppen 35 und 36, auf der Einlaßseite des zu verdampfenden Mediums, über den ringförmigen Sammelraum 38, der die Einlaßöffnung 39 für das zu verdampfende Medium umgibt. Schließlich wird das verdampfte Medium in einem Auslaßraum 40 gesammelt, von wo aus es ins Freie tritt.

Auch bei diesem Verdampfungswärmetauschers sind in alternierender Folge Umlenkblenden 49 und 51 vorgesehen. Die Ein- und Auslaßöffnung für die durch den Prozeßraum fließende Kühlflüssigkeit wurden bei dieser Darstellung fortgelassen. Die Bewegungsrichtungen für die Flüssigkeit, im vorliegenden Fall wiederum Wasser, und das zu verdampfende Medium, Ammoniak, sind jeweils durch Pfeile gekennzeichnet.

Die Kühlflüssigkeit tritt in den in der Zeichnung rechten Teil des Prozeßraumes mit einer Einlaßtemperatur ein, die im Fall des hier beschriebenen Ausführungsbeispiels zwischen etwa 24 und 67°C liegt. Sie strömt dann zwischen den Röhrchen mit dem zu verdampfenden Medium hindurch, wobei sie den größten Teil der in ihr enthaltenen Wärme auf dieses Medium überträgt, bevor sie mit einer Temperatur von etwa 5 bis 6°C aus dem Prozeßraum austritt. Die im Prozeßraum alternierend angeordneten Umlenkblenden bewirken dabei, wie aus Fig. 6 ersichtlich, einen mäanderförmigen Strömungsverlauf der Kühlflüssigkeit, was zu ständig erneuten Durchmischungen und damit zu einer sehr homogenen Temperaturverteilung der zwischen den Röhrchen hindurchfließenden Stränge der Kühlflüssigkeit führt.

Auf der anderen Seite wird das zu verdampfende Medium mit einer Einlaßtemperatur von etwa -10°C in die Zentralgruppe der Röhrchen eingespeist. Beim Durchströmen der Röhrchen heizt es sich bis auf Verdampfungstemperatur auf und beginnt eventuell bereits mit der Verdampfung. Am Ende der Röhrchen gerät es in den für alle durchströmten Röhrchen der Zentralgruppe gemeinsamen Sammelraum, der sich am Auspuffende befindet, von wo es umgelenkt und in die Röhrchen der Zwischengruppe eingeleitet wird. Hierbei vermischt es sich aufgrund der Umlenkung um 180°.

In allen Zentralröhrchen herrschen damit gleiche Strömungsbedingungen. Das Ammoniak strömt jetzt in der gleichen Richtung wie das zu kühlende Wasser von der Ammoniak-Auspuffseite zur Ammoniak-Einspritzseite und verdampft dabei nahezu vollständig. Dabei wird es, da das Ende der Zentralröhrchen an der Wasseraustrittsseite des Wärmetauschers liegt, maximal bis auf dessen Austrittstemperatur (6°C) überhitzt. Es strömt in den zweiten Sammelraum, wo sich bei einer erneuten Umlenkung um 180° wiederum nahezu homogene Anströmbedingungen für die nächste Strömungsstrecke des Ammoniaks ergeben.

Schließlich strömt das Ammoniak - mit einigen wenigen Resttropfen beladen - erneut der Wasserströmung entgegen durch die Randröhrchen zur Wassereintritts- und Ammoniak-Austrittsseite des Wärmetauschers. Hierbei erwärmt es sich bis auf eine Resttemperaturdifferenz von etwa 5 bis 10°C zur Wassereintrittstemperatur, die, je nach Lastfallt, zwischen 24 und 67°C liegt und tritt schließlich vollständig verdampft aus.

Das vorstehend beschriebene Funktionsprinzip gilt auch für die in den Figuren 1 bis 6 dargestellte Anordnung, wobei der einzige Unterschied darin besteht, daß das zu verdampfende Medium in diesem Fall nur einmal umgelenkt wird und in den gleichen Endbereich des Prozeßraumes als Dampf austritt, an dem sich auch der Auslaß für die Kühlflüssigkeit befindet.

## Patentansprüche

1. Verdampfungswärmetauscher mit wenigstens einem aktiven Flüssigkeitskühlkreislauf zur Abführung von Wärme in Raumfahrzeugen unter Schwerelosigkeit sowie bei unterschiedlichen Beschleunigungen, mit einem Prozeßraum, in dem voneinander beabstandet und zu einem Bündel zusammengefaßt Röhrchen angeordnet sind, die von dem zu verdampfenden Medium durchströmt werden und zwischen die die Kühlflüssigkeit einleitbar ist, und bei dem die Strömungsrichtung der Kühlflüssigkeit durch Blenden beeinflußbar ist, dadurch gekennzeichnet, daß die Röhrchen (3,33) zu wenigstens zwei Gruppen (34 bis 36) zusammengefaßt sind, die an ihren Endbereichen durch Sammelräume (18,37,38) miteinander verbunden sind und die von dem zu verdampfenden Medium nacheinander in entgegengesetzter Richtung durchströmt werden und von denen eine Gruppe (34) mit einem Einlaßraum (8,39) und eine weitere Gruppe (36) mit Auslaßöffnungen (12 bis 15, 40) für das zu verdaampfende Medium verbunden ist.

2. Verdampfungswärmetauscher nach Anspruch 1, dadurch gekennzeichnet, daß die einzelnen, nacheinander durchströmten Gruppen von Röhrchen (34 bis 36) konzentrisch zueinander liegen.

3. Verdampfungswärmetauscher nach Anspruch 1 oder 2, dadurch gekennzeichnet, daß im Inneren des Prozeßraumes (2,32) Lochblenden (19,49) und Ringblenden (21,51) in alternierender Folge entlang der Hauptströmungsrichtung der Kühlflüssigkeit senkrecht zu den Röhrchen (3,33) stehend angeordnet sind.

4. Verdampfungswärmetauscher nach einem der Ansprüche 1 bis 3, dadurch gekennzeichnet, daß der Abstand der Röhrchen (3,33) voneinander wenigstens gleich groß ist wie der Abstand des von den Röhrchen (3,33) gebildeten Bündels von der Innenwand des Prozeßraumes (2).

## Claims

1. Evaporation heat exchanger with at least one active liquid cooling circuit for removing heat in spacecraft under zero gravity and with different accelerations and with a process chamber in which spaced tubes are assembled to form a bank, through which tubes the medium to be evaporated flows and between which the cooling liquid can be introduced, in which exchanger the direction of flow of the cooling liquid can be influenced by diaphragms, characterised in that the tubes (3, 33) are assembled to form at least two groups (34 to 36) which are connected together at their end regions by collecting chambers (18, 37, 38) and through which the medium to be evaporated flows one after the other in opposite directions, one group (34) of which is connected to an inlet chamber (8, 39) and another group (36) to outlet openings (12 to 15, 40) for the medium which is to be evaporated.

2. Evaporation heat exchanger according to claim 1, characterised in that the individual groups of tubes (34 to 36), through which medium flows one after the other, are disposed concentrically with one another.

3. Evaporation heat exchanger according to claim 1 or 2, characterised in that perforated diaphragms (19, 49) and annular diaphragms (21, 51) are arranged in an upright manner inside the process chamber (2, 32) in an alternating sequence along the main direction of flow of the cooling liquid normal to the tubes (3, 33).

4. Evaporation heat exchanger according to one of claims 1 to 3, characterised in that the spacing between the tubes (3, 33) is at least as great as the spacing of the bank formed by the tubes (3, 33) from the inner wall of the process chamber (2).

## Revendications

1. Echangeur thermique à vaporisation comportant :
- au moins un circuit actif de circulation d'un fluide réfrigérant, pour évacuer la chaleur dans des véhicules spatiaux en apesanteur ainsi qu'au cours de diverses accélérations.
- une chambre d'opération contenant des petits tubes espacés les uns des autres et réunis en un faisceau, traversés par le liquide à vaporiser et entre lesquels on peut faire circuler le fluide réfrigérant, la direction d'écoulement de ce fluide pouvant être influencée par des écrans,
caractérisé en ce que les petits tubes (3, 33) sont rassemblés au moins en deux groupes (34 à 36) reliés ensemble à leurs extrémités par des têtes collectrices (18, 37, 38), ces groupes étant traversés successivement, selon des directions opposées, par le fluide à vaporiser, un groupe (34) étant équipé d'un volume d'entrée (8, 39) et un autre groupe (36) relié aux ouvertures de sortie (12 à 15, 40) à l'usage du fluide à vaporiser.

2. Echangeur selon la revendication 1, caractérisé en ce que les groupes de petits tubes (34 à 36) distincts et traversés par le fluide successivement sont concentriques les uns aux autres.

3. Echangeur selon la revendication 1 ou 2, caractérisé en ce que dans la chambre d'opération, des écrans perforés (19, 49) et des écrans annulaires (21, 51) sont montés en alternance le long de la veine principale du courant de circulation du fluide réfrigérant, perpendiculairement aux petits tubes (3, 33).

4. Echangeur selon une des revendications 1 à 3, caractérisé en ce que la distance entre les petits tubes (3, 33) est au moins égale à celle existante du faisceau formé par ces petits tubes (3, 33) de la paroi intérieure de la chambre d'opération.
